# EUROPÄISCHE PATENTSCHRIFT

(11) **EP 2 646 502 B1**
(45) Veröffentlichungstag und Bekanntmachung des Hinweises auf die Patenterteilung: **22.02.2017**
(21) Anmeldenummer: 11813324.8
(22) Anmeldetag: 01.12.2011
(51) Int. Cl.: C08J 9/232, C08J 9/24, B22F 3/10, B22F 3/11

(54) **ERZEUGUNG NANODISPERSER EINSCHLÜSSE IN EINER HOCHVISKOSEN MATRIX**
GENERATION OF NANODISPERSE INCLUSIONS IN A HIGH-VISCOSITY MATRIX
GÉNÉRATION D'INCLUSIONS NANODISPERSÉES DANS UN MATRICE DE VISCOSITÉ ÉLEVÉE

(30) Priorität: 01.12.2010 DE 102010053064
(43) Veröffentlichungstag der Anmeldung: 09.10.2013
(73) Patentinhaber: SUMTEQ GmbH, 50939 Köln (DE)
(72) Erfinder: STREY, Reinhard, 41540 Dormagen (DE); MÜLLER, Alexander, 50733 Köln (DE)
(74) Vertreter: dompatent von Kreisler Selting Werner - Partnerschaft von Patent- und Rechtsanwälten mbB
(86) Internationale Anmeldenummer: PCT/EP2011/071541
(87) Internationale Veröffentlichungsnummer: WO 2012/072755

(56) Entgegenhaltungen:
- WO-A1-2005/092959
- FR-A- 1 149 375
- DATABASE WPI Week 200875 Thomson Scientific, London, GB; AN 2008-M70890 XP002679192, -& JP 2008 231355 A (SAITAMA KEN) 2. Oktober 2008 (2008-10-02)

## Beschreibung

Die Erfindung betrifft ein Verfahren zur Erzeugung eines porösen Materials mit homogenen gashaltigen Einschlüssen im Mikrometer- und Submikrometer-Bereich.

### Hintergrund der Erfindung

In Anbetracht der zunehmenden Bedeutung des Klimaschutzes und der CO₂-Emissionen hat sich die Herstellung isolierender Materialien in den letzten Jahrzehnten zu einem bedeutenden Wirtschaftszweig entwickelt. Eine verbesserte Isolation von Gebäuden würde beispielsweise dazu führen, dass weniger Wärmeleistung, welche etwa 40% des Energieverbrauchs in Deutschland ausmacht, aufgebracht werden müsste und somit der CO₂-Ausstoß verringert würde (Lünser, H., Dämmstoffe im Hochbau (2000) Wirtschaftsministerium Baden-Württemberg, Stuttgart). Damit diese Dämmstoffe jedoch ökonomisch sinnvoll eingesetzt werden können, sind Kosten und Aufwand der Herstellung entscheidende Faktoren.

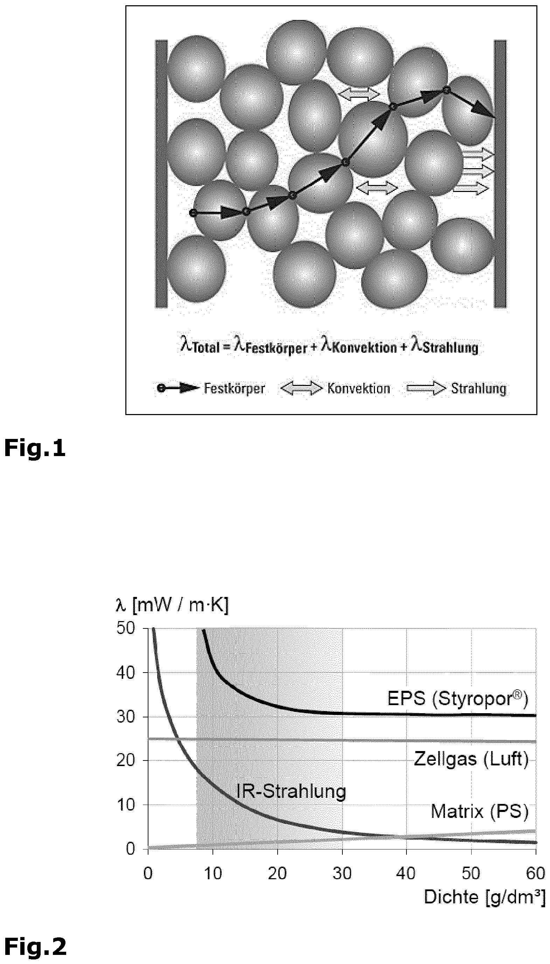

Poröse Schaumstoffe haben sich in den letzten Jahren als besonders effektive Dämmmaterialien erwiesen. Für diese Schaumstoffe ist die Wärmeleitfähigkeit λ (in W m⁻¹ K⁻¹) ein entscheidendes Kriterium. Sie gibt die Fähigkeit eines Materials an Wärme zu übertragen bzw. zu dämmen. Die Wärmeleitfähigkeit setzt sich dabei aus drei Faktoren zusammen (Fig. 1). Diese Beiträge sind die Wärmeübertragung über das in den Poren des Schaums eingeschlossene Zellgas, die Wärmeleitung über das Stegmaterial (Zellmatrix) sowie die Wärmestrahlung (IR-Strahlung). In Fig. 2 sind die verschiedenen Beiträge zur Gesamtwärmeleitfähigkeit eines Polystyrol-Schaums (EPS) dargestellt. Wie zu erkennen ist, liefert das Zellgas den größten Beitrag der Wärmeübertragung.

Ein möglicher Ansatz zur Verringerung der Wärmeleitung über das Zellgas ist die Reduzierung der Porengröße, da ab einer gewissen Porengröße der sogenannte *Knudsen*-Effekt an Bedeutung gewinnt. Dieser besagt, dass für Gasmoleküle, die sich in einem abgeschlossenem Raum befinden, dessen Durchmesser kleiner als die doppelte mittlere freie Weglänge des Gases λ_{G} ist, die Stoßwahrscheinlichkeit mit einer Wand höher ist als mit einem anderen Gasmolekül. Hierdurch ist keine gerichtete Bewegung des Gases in den Poren mehr möglich, weshalb in diesem Grenzfall die Wärmeübertragung durch das Gas zusammenbricht Seinfeld, J.H. und Pandis, S. N., Atmospheric Chemistry and Physics (1998) Wiley-Interscience, New York; Raed, K. und Gross, U., International Journal of Thermophysics 4:1343-1356 (2009)). Die mittlere freie Weglänge für Luft bei Raumtemperatur beträgt λ_{G} = 70 nm. Um den *Knudsen*-Effekt in Dämmmaterialien auszunutzen müssten daher Porengrößen unterhalb von 140 nm realisiert werden. Im Vergleich zu herkömmlichen Schaumstoffen wäre die Wärmeleitfähigkeit eines solchen nanozellularen Schaums erheblich geringer, weswegen es möglich wäre mit bedeutend dünneren Dämmschichten zu arbeiten. Dies hätte wiederum eine erhebliche Einsparung an Rohstoffen zur Folge.

Zur Darstellung solcher nanostrukturierten Schäume sind bislang mehrere Verfahren bekannt, wobei die beiden vielversprechendsten Ansätze das in der Aerogelherstellung verwendete Sol-Gel-Verfahren sowie das POSME-Prinzip sind (Kistler, S., Journal of Chemical Physics 36:52-64 (1932); Strey, R. et al., DE 10260815B4). Der Nachteil des Sol-Gel-Verfahrens besteht darin, dass im letzten Prozessschritt eine überkritische Trocknung des fixierten Gels notwendig ist, wodurch sich dieses Verfahren als sehr aufwändig und somit kostenintensiv erweist. Im Vergleich stellt sich das POSME-Verfahren als deutlich kostengünstiger dar. Bei diesem Verfahren wird eine überkritische Mikroemulsion als Templat verwendet, welche sich durch eine Strukturgröße von 1-100 nm auszeichnet. Durch Fixierung der Mikrostruktur und gleichzeitiger kontinuierlicher Expansion der Mikroemulsion sollte auf diese Weise ebenfalls die Darstellung von nanoporösen Materialien möglich sein. Allerdings konnte die Struktur der Mikroemulsion bisher nicht ohne Vergröberung auf den Schaum übertragen werden, da es während des Fixierungsprozesses zu Alterungserscheinungen kommt, welche die Struktur vergröbern (Khazova, E., Dissertation (2010) Universität zu Köln). Des Weiteren ist für die thermodynamische Stabilität der Mikroemulsion ein Tensid notwendig, was das Produkt einerseits verunreinigt und andererseits einen Kostenpunkt darstellt. Zum jetzigen Zeitpunkt sind daher sowohl das Sol-Gel-Verfahren als auch das POSME-Prinzip für großtechnische Anwendungen ungeeignet.

Darüber hinaus beschreibt JP-A-2008231355 ein Verfahren zur Herstellung eines Filters durch Imprägnieren von Mikropartikeln von einem thermoplastischen Harz mit einer überkritischen Flüssigkeit. Weiterhin beschreibt FR-A-1149375 nanoporöse Polymerschaumstoffe, die einen mittleren Porendurchmesser im Bereich von 10 bis 1000nm aufweisen und die durch kontrolliertes Sintern von Polymerpulvern unter einer inerten Atmosphäre erhältlich sind. In keiner der beiden Schriften wird erwähnt, dass während des Verfahrens zur Herstellung der gewünschten Produkte die Glasübergangstemperatur (Tg) zunächst über- und nachfolgend unterschritten werden muss.

Ein weiterer Ansatz zur Herstellung von nanoporösen Materialien könnte sich aus der Verwendung von Polymer-Nanopartikeldispersionen ergeben. Durch das Abscheiden des Polymers aus den entsprechenden Dispersionen ist es möglich amorphe Packungen von Nanopartikeln oder Nanopartikelkristalle zu erzeugen, in denen die Polymerpartikel in dichter Packung vorliegen. Mittels der Einwirkung eines überkritischen Gases auf eine solche Nanopartikelpackung kann, bei gleichzeitiger Erwärmung oberhalb der Glastemperatur des Polymers, Gas in den Freiräumen der Packung eingeschlossen werden. Somit wären nanodisperse Einschlüsse in der Polymermatrix gebildet worden. Durch anschließende Expansion lassen sich diese
Einschlüsse aufschäumen, wodurch die Darstellung nanoporöser Materialien möglich sein sollte. Im Vergleich zum POSME-Prinzip hat dieses Verfahren den Vorteil, dass es ohne den Einsatz von Tensid auskommt. Ferner lassen sich durch kontrollierte Abscheidungsprozesse problemlos dünne Nanopartikelschichten auf Oberflächen auftragen, die anschließend aufgeschäumt werden können.

Die Aufgabe der vorliegenden Erfindung bestand darin, zu zeigen, dass die Darstellung von nanostrukturierten Polymeren bzw. Schäumen durch die Erzeugung nanodisperser Einschlüsse in einer hochviskosen Matrix möglich ist.

### Kurzbeschreibung der Erfindung

Es wurde nunmehr gefunden, dass nanoporöse Materialien durch Erzeugung nanodisperser Einschlüsse eines überkritischen Gases in einer hochviskosen Matrix hergestellt werden können. Ausgehend von kolloidalen Matrixkristallen, nämlich aus Thermoplasten-Nanopartikelkristallen wie Polystyrol- und Polymethylmethacrylat-Nanopartikelkristallen, welche mittels Emulsionspolymerisation hergestellt werden können und welche Partikelradien zwischen 20 und 500 nm aufweisen (bestimmt durch dynamische Lichtstreuung (DLS) und Kleinwinkelneutronenstreuung (SANS)), oder aus Kristallen von Glasbildnern wie Glas, Metallen und anderen amorph erstarrenden Substanzen (Zuckern), welche in einer dichten Packung der Partikel in dem kolloidalen Kristall vorliegen (nachgewiesen durch rasterelektronenmikroskopischen (REM) Aufnahmen), wurde durch Zugabe von CO₂ bzw. N₂ bei überkritischen Bedingungen die Glastemperatur des Matrixmaterials abgesenkt. Bei anschließender Expansion erhöhte sich die Glastemperatur auf den ursprünglichen Wert, was zur Fixierung eines Schaums aus dem Matrixmaterial führte. Auf diese Weise können Schäume mit einer Porengröße unterhalb von 1 µm realisiert werden. Die Porengröße und die Dichte des Polymerschaums lassen sich durch die Wahl des Polymers sowie des Gases einstellen. Weiterhin konnte experimentell gezeigt werden, dass die Löslichkeit des Treibmittels in der Matrix nicht kritisch ist und nicht bei der Wahl von Matrixmaterial und überkritischem Gas berücksichtigt werden muss. Die Erfindung betrifft somit
(1) ein Verfahren zur Erzeugung eines porösen Materials mit homogenen gashaltigen Einschlüssen im Mikrometer- und Submikrometer-Bereich umfassend
   (a) Bereitstellen einer kompakten Packung des dem porösen Material entsprechenden Ausgangsmaterials, in der die einzelnen Partikel einander berühren (z.B. auch in Form eines kolloidalen Kristalls);
   (b) Zugabe eines überkritischen Gases oder überkritischen Gasgemisches;
   (c) Überschreiten der Glasübergangstemperatur (*T*_{g}) des (Ausgangs-)Materials unter Kontinuitätsinversion; und
   (d) Entspannen auf Atmosphärendruck und Verfestigen durch Unterschreiten von *T*_{g} des (Ausgangs-)Materials;
(2) eine bevorzugte Ausführungsvorm von (1), wobei das poröse Material bzw. Ausgangsmaterial ein thermoplastisches Material ist.

Gemäß der Erfindung wird ein überkritisches Fluid als überkritsches Gas bezeichnet, wenn sowohl die Temperatur als auch der Druck über den kritischen Werten liegen, für CO₂ also T>T_{C}=30,97°C, p>p_{C}=73,75 bar.

### Kurzbeschreibung der Figuren

Fig. 1: Schematische Darstellung der einzelnen Beiträge zur Wärmeleitfähigkeit eines porösen Feststoffs (Porextherm, www.porextherm.com).
Fig. 2: Auftragung der Materialdichte gegen die Wärmeleitfähigkeit für die unterschiedlichen Beiträge zur Gesamtwärmeleitfähigkeit von Styropor^{®} (Kessenich, E., Smart Energy Home (2007) BASF Future Business GmbH, Ludwigshafen).

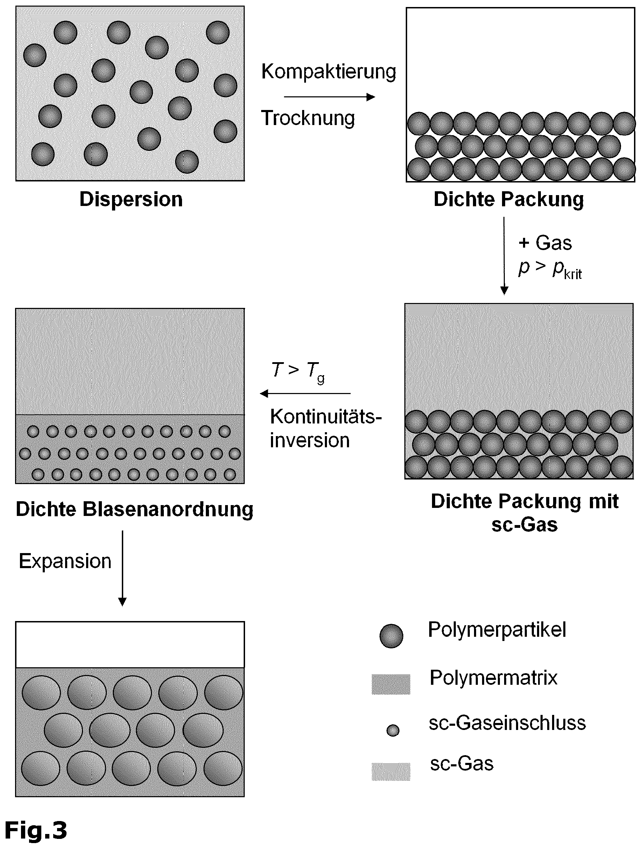

Fig. 3: Schema des Prinzips der Erzeugung nanodisperser Einschlüsse in einer hochviskosen Matrix. Nach der Überführung in einen kolloidalen Kristall, wird überkritisches Gas zugegeben. Anschließend wird *T*_{g} des Polymers überschritten, so dass eine Phaseninversion stattfindet, d. h. das sc-Gas liegt nun dispergiert in der Polymermatrix vor. Im letzten Schritt wird die Probe auf Atmosphärendruck entspannt.

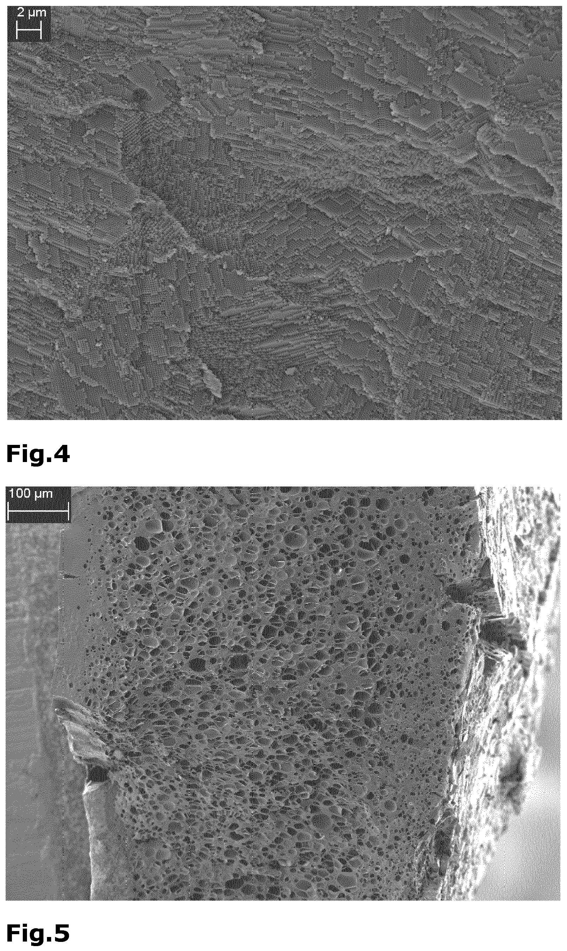

Fig. 4: REM-Aufnahme einer Bruchkante des Ausgangsmaterials für Aufschäumversuche (2000fache Vergrößerung). Es ist deutlich zu erkennen, dass sich die einzelnen Partikel zu einem dicht gepackten kolloidalen Kristall anordnen. Die PMMA-Partikel haben einen Durchmesser von ca. 300 nm.
Fig. 5: REM-Aufnahme der Bruchkante eines bei 50°C und 200 bar (CO₂) aufgeschäumten PMMA-Kristalls (100fache Vergrößerung). Die Probe wurde 10 min den oben genannten Bedingungen ausgesetzt, bevor expandiert wurde. Die Morphologie des Schaums in der Mitte unterscheidet sich in ihrer Strukturgröße von der am Rand, wobei die Porengröße in der Mitte bei einer Größenordnung von 20 µm liegt. Die Oberfläche des Schaums ist nahezu glatt.

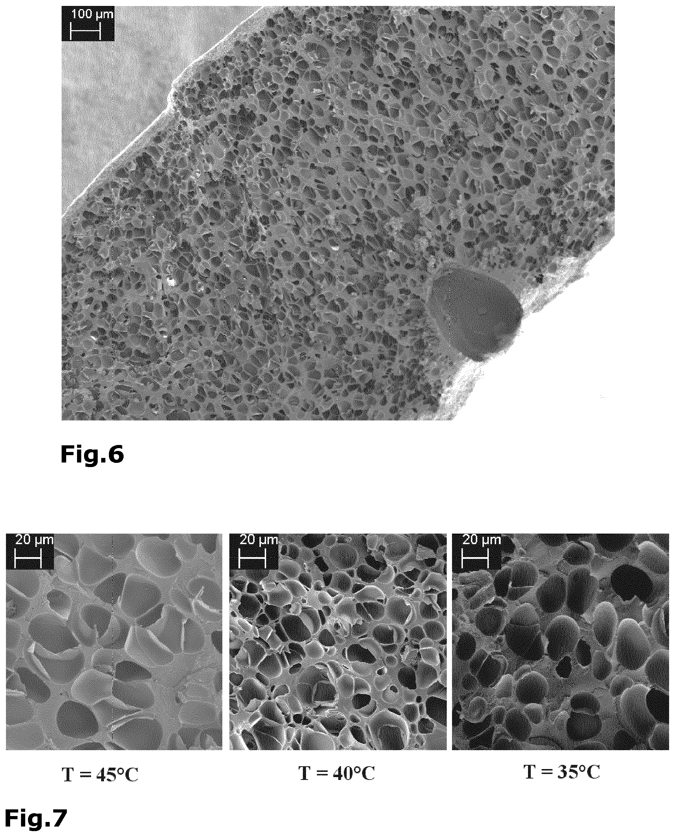

Fig. 6: REM-Aufnahme der Bruchkante eines bei 50°C und 200 bar (CO₂) aufgeschäumten PMMA-Kristalls (50fache Vergrößerung). Die Probe wurde nur kurz den oben genannten Bedingungen ausgesetzt, bevor expandiert wurde. Zuvor wurde die
   Probe eine Stunde einer CO₂-Atmosphäre ausgesetzt. Die Strukturgröße liegt erneut bei ca. 20 µm, wobei ein deutlich homogeneres Aufschäumen stattgefunden hat.
Fig. 7: REM-Aufnahmen der Bruchkanten von aufgeschäumten PMMA-Kristallen (200fache Vergrößerung). Die Proben wurden für 10 min den jeweiligen Temperaturen bei einem CO₂-Druck von 200 bar ausgesetzt, bevor expandiert wurde. Alle Schäume liegen bei einer ähnlichen, mittleren Strukturgröße von ca. 20 µm.

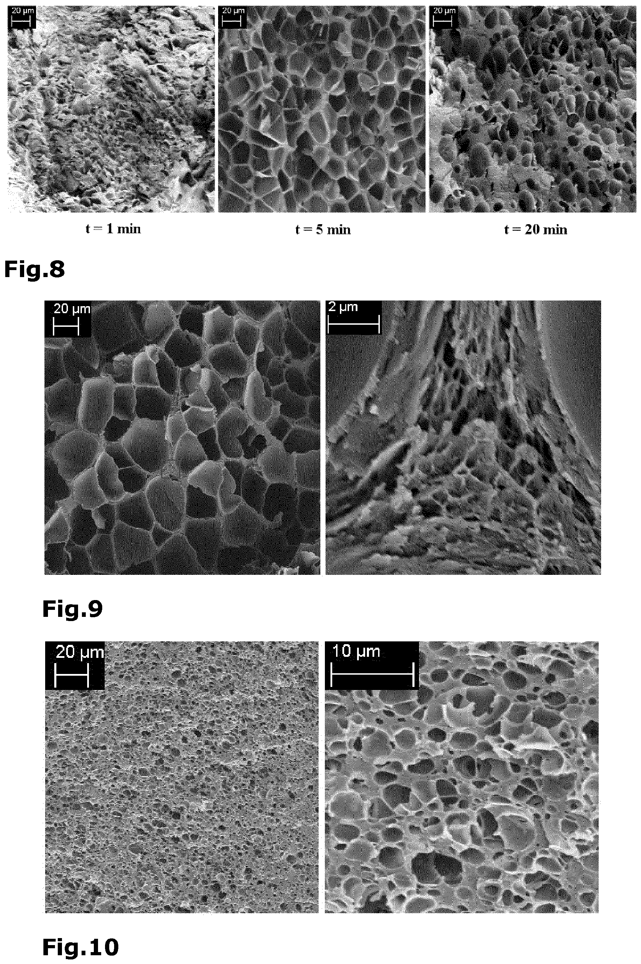

Fig. 8: REM-Aufnahmen der Bruchkanten von aufgeschäumten PMMA-Kristallen (250fache Vergrößerung). Die Proben wurden für die jeweiligen Temperierdauern 40°C und einem CO₂-Druck von 200 bar ausgesetzt, bevor expandiert wurde. Aus den Aufnahmen geht hervor, dass es lediglich bei einer Temperierdauer von 5 min zur Ausbildung eines geschlossen-zelligen Schaums kommt, welcher mit den bisherigen Schäumen vergleichbar ist. Nach 1 min kommt es nur zu einem sehr schwachen Aufschäumen der Probe. Die Probe nach 20 min weist eine hohe Materialdichte auf, was ebenfalls dafür spricht, dass der Aufschäumprozess lediglich schwach stattgefunden hat.
Fig. 9: REM-Aufnahmen der Bruchkante eines bei 75 bar (CO₂) und 20°C aufgeschäumten PMMA-Kristalls (200 und 4,000fache Vergrößerung). Die Probe wurde 10 min den oben genannten Bedingungen ausgesetzt, bevor expandiert wurde. Links: Die bereits aus vorherigen Aufnahmen bekannte Struktur in der Größenordnung von 20 µm. Rechts: Genauere Betrachtung der Plateau-Border (Vergrößerung des rot markierten Ausschnitts). Es wird deutlich, dass eine Unterstruktur vorliegt, welche ebenfalls schaumartig ist, jedoch in einer bedeutend kleineren Größenordnung liegt.
Fig. 10: REM-Aufnahmen der Bruchkante einer bei 50°C und 200 bar aufgeschäumten dünnen Schicht aus PMMA-Nanopartikeln (200 und 1,000fache Vergrößerung). Die Probe wurde 10 min den oben genannten Bedingungen ausgesetzt, bevor expandiert wurde. Die Porengröße liegt hier zwischen 0.5 und 5 µm.

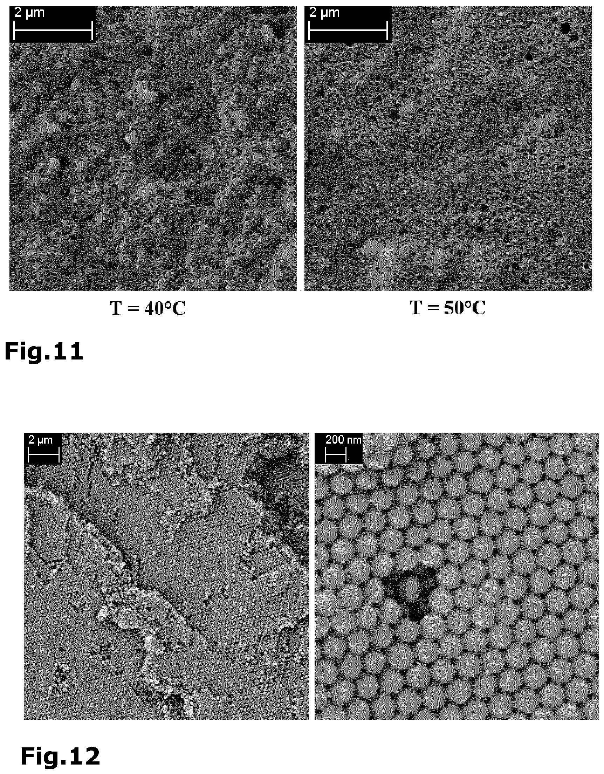

Fig. 11: REM-Aufnahmen der Oberfläche von aufgeschäumten dünnen Schichten bestehend aus PMMA-Nanopartikeln (5,000fache Vergrößerung). Die Proben wurden für 10 min den jeweiligen Temperaturen bei einem CO₂-Druck von 200 bar ausgesetzt, bevor expandiert wurde. Links: Auf der Oberfläche sind die eingesetzten Nanopartikel teilweise erhalten geblieben. Ferner haben sich Poren in der Größenordnung zwischen 50 und 200 nm gebildet, welche durch die Gaseinschlüsse zwischen den Partikeln hervorgerufen wurden. Rechts: Bei höherer Temperatur kommt es zum stärkeren Verschmelzen der Nanopartikel, wobei die zugrunde liegende Struktur noch erkennbar ist. Hier haben sich ebenfalls Vertiefungen im Nanometerbereich gebildet.
Fig. 12: REM-Aufnahmen der Bruchkante eines Aufschäumversuchs bei 99°C und 300 bar N₂-Druck (3,000 und 20,000fache Vergrößerung). Die Probe wurde 10 min den oben genannten Bedingungen ausgesetzt, bevor expandiert wurde. Die Kugelpackung der PMMA-Nanopartikel ist erhalten geblieben.

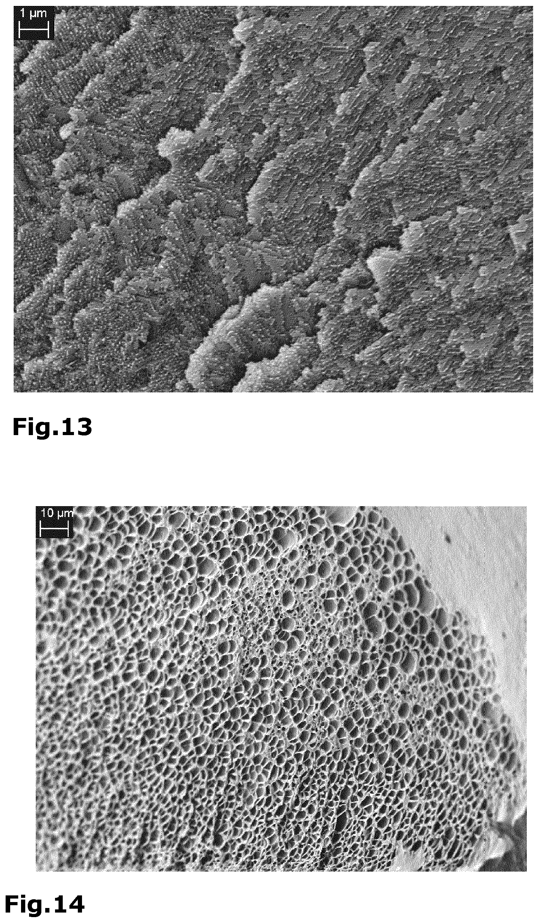

Fig. 13: REM-Aufnahme einer Bruchkante des Ausgangsmaterials für Aufschäumversuche (5,000fache Vergrößerung). Es ist deutlich zu erkennen, dass sich die einzelnen Partikel zu einem dicht gepackten kolloidalen Kristall anordnen. Die PS-Partikel haben einen Durchmesser von ca. 80 nm.
Fig. 14: REM-Aufnahme der Bruchkante eines bei 60°C und 200 bar (CO₂) aufgeschäumten PS-Kristalls (500fache Vergrößerung). Die Probe wurde 10 min den oben genannten Bedingungen ausgesetzt, bevor expandiert wurde. Innerhalb der Probe hat sich ein Schaum mit einer Porengröße zwischen 1 und 5 µm gebildet, die Oberfläche der Probe ist nahezu glatt.

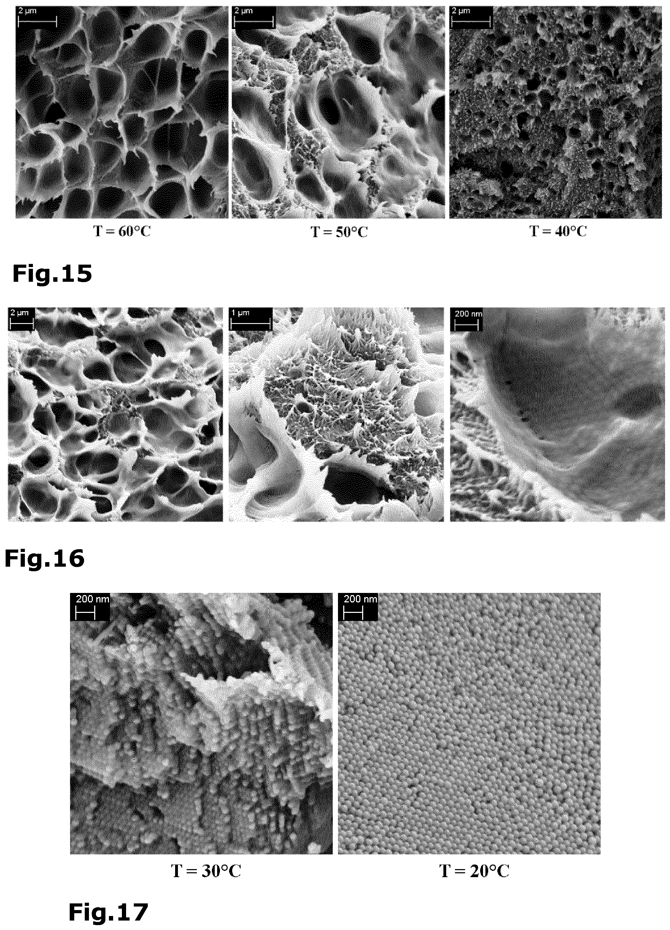

Fig. 15: REM-Aufnahmen der Bruchkanten von aufgeschäumten PS-Kristallen (5,000fache Vergrößerung). Die Proben wurden für 10 min den jeweiligen Temperaturen bei einem CO₂-Druck von 200 bar vor der Expansion ausgesetzt. Mit sinkender Temperatur nimmt die Porengröße ab, allerdings steigt die Materialdichte beträchtlich.
Fig. 16: REM-Aufnahme der Bruchkante eines bei 50°C, 200 bar (CO₂) und einer Temperierdauer von 10 min. aufgeschäumten PS-Kristalls (3,000, 10,000 und 30,000fache Vergrößerung). In der mittleren Fig. sieht man Rückstände der zusammen-geschmolzenen Nanopartikel, wohingegen die rechte Fig. zeigt, dass die vermeintlich glatte Oberfläche des Materials ebenfalls eins Nanostrukturierung aufweist.
Fig. 17: REM-Aufnahmen der Bruchkanten von aufgeschäumten PS-Kristallen (20,000fache Vergrößerung). Die Proben wurden für 10 min den jeweiligen Temperaturen bei einem CO₂-Druck von 200 bar ausgesetzt, bevor expandiert wurde. Die Partikelstruktur blieb auch nach der Expansion in beiden Fällen erhalten. Dies lässt darauf schließen, dass durch das CO₂ die Glastemperatur von Polystyrol nicht weit genug abgesenkt wurde, so dass diese überschritten wurde. Lediglich bei der linken Aufnahme ist ansatzweise ein Zusammenschmelzen der Partikel erkennbar, wobei es nicht zum Aufschäumen der Probe kam.

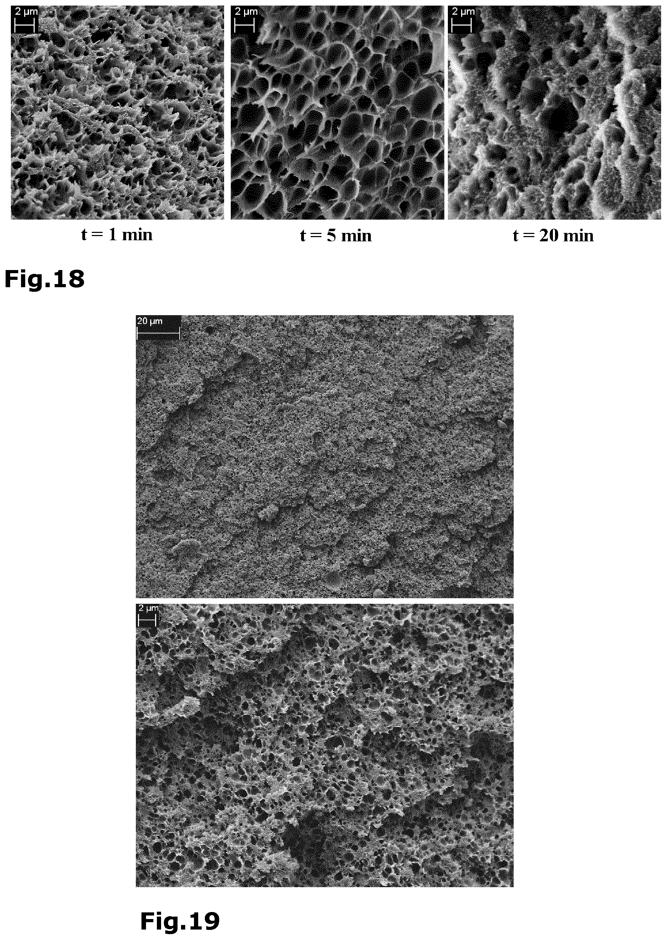

Fig. 18: REM-Aufnahmen der Bruchkanten von aufgeschäumten PS-Kristallen (2,000fache Vergrößerung). Die Proben wurden für die jeweiligen Temperierdauern 50°C und einem CO₂-Druck von 200 bar ausgesetzt, bevor expandiert wurde. Aus den Aufnahmen geht hervor, dass es lediglich bei einer Temperierdauer von 5 min zur Ausbildung eines Schaums kommt, welcher mit den bisherigen Schäumen vergleichbar ist. Während es nach 1 Minute nur zu einem sehr schwachen Aufschäumen der Probe gekommen ist, weist die Probe nach 20 min eine hohe Materialdichte auf, was ebenfalls dafür spricht, dass der Aufschäumprozess lediglich schwach stattgefunden hat.
Fig. 19: REM-Aufnahme der Bruchkante eines bei 99°C und 300 bar (N₂) aufgeschäumten PS-Kristalls (500 und 2,000fache Vergrößerung). Die Probe wurde 10 min den oben genannten Bedingungen ausgesetzt, bevor expandiert wurde. Wie auf den beiden Aufnahmen zu erkennen, hat sich ein Schaum gebildet, welcher zwar eine recht hohe Materialdichte aufweist sich dafür aber durch eine kleine Porengröße bis 1 µm auszeichnet.

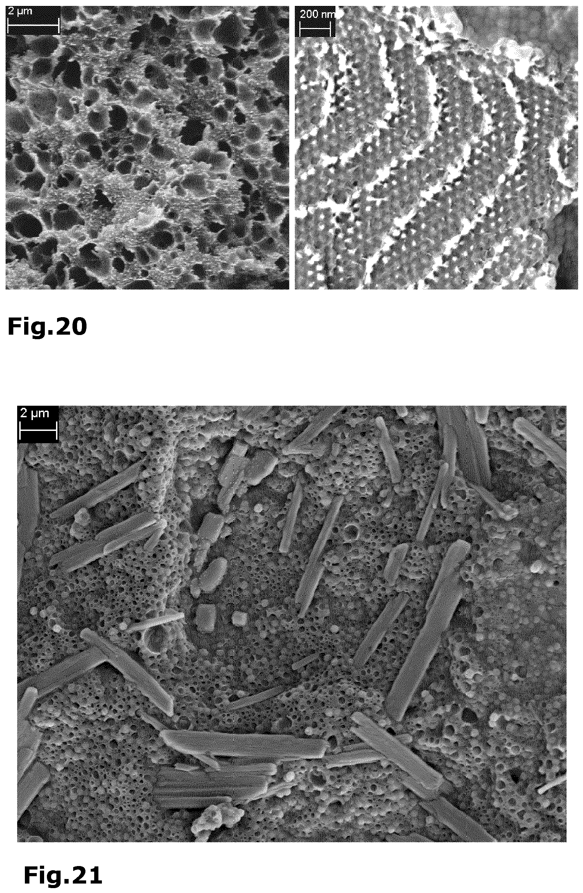

Fig. 20: REM-Aufnahme der Bruchkante eines bei 99°C und 300 bar (N₂) aufgeschäumten PS-Kristalls (5,000 und 30,000fache Vergrößerung). Die Probe wurde 10 min den oben genannten Bedingungen ausgesetzt, bevor expandiert wurde. Bei diesen Vergrößerungen wird deutlich, dass der Schaumstruktur eine Substruktur zu Grunde liegt, in der sowohl die Partikel als auch deren Packungsart zu erkennen sind.
Fig. 21: REM-Aufnahme eines PMMA-Schaums mit einem Porendurchmesser unterhalb von 200 nm. Die Verunreinigungen auf der Probenoberfläche stammen von der Probenpräperation und sind zu vernachlässigen.

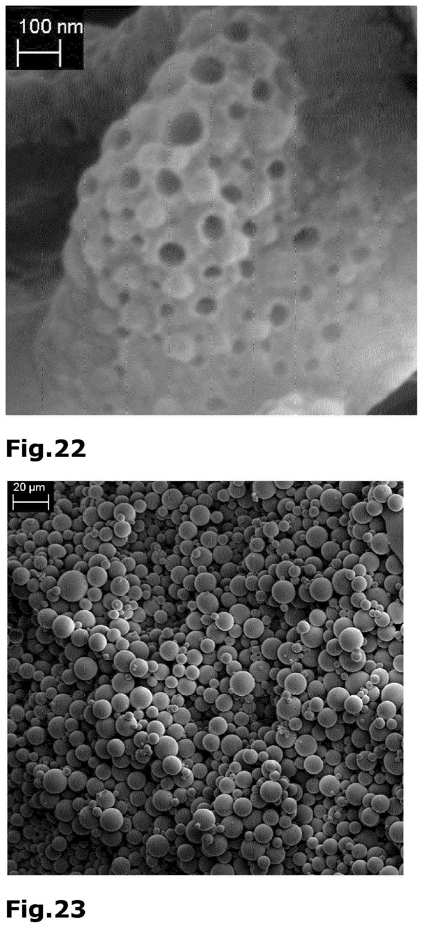

Fig. 22: REM-Aufnahme einer Region eines PMMA-Schaums bei der es zur Ausbildung eines Schaums mit einer Porengröße unterhalb von 100 nm kam. Zudem geht aus dem Bild hervor, dass der Schaum eine hohe Porosität aufweist.
Fig. 23: Rasterelektronenmikroskopische Aufnahme einer amorphen Anordnung von Zucker-Partikeln mit einem Durchmesser von 1 bis 20 µm. Diese dienen als Ausgangsmaterial zur Zuckerschaumherstellung nach dem NF-CID-Verfahren.

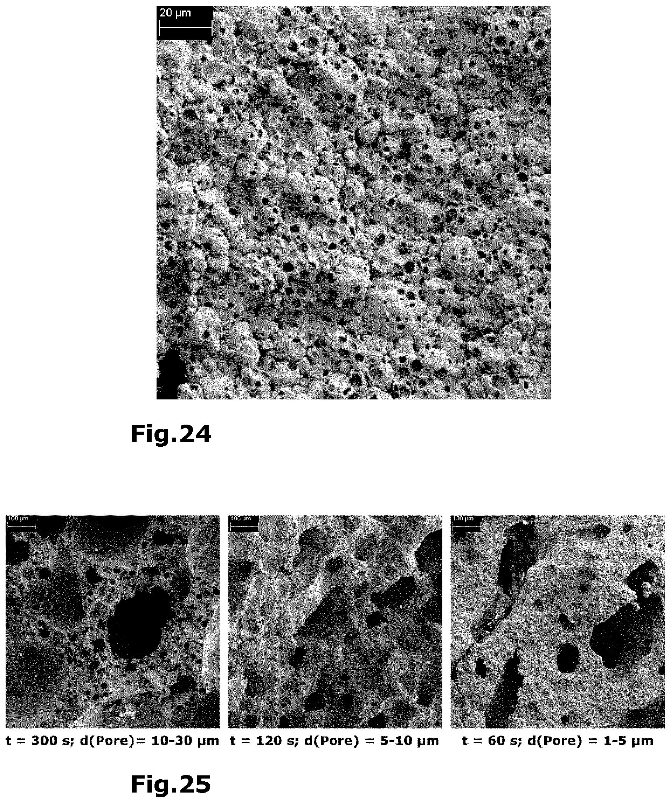

Fig. 24: Rasterelektronenmikroskopische Aufnahme eines mittels des NF-CID-Verfahrens hergestellten Zuckerschaums mit einer Porengröße zwischen 1 und 5 µm. Ausgehend von einer amorphen Packung aus Zucker-Partikeln wurde mit CO₂ als Treibmittel bei 250 bar und 60°C geschäumt, wobei die Probe den Bedingungen 60 s ausgesetzt wurde.
Fig- 25: Rasterelektronenmikroskopische Aufnahmen von Zuckerschäumen, die mittels des NF-CID-Verfahrens hergestellt wurden. Ausgehend von einer amorphen Packung aus Zucker-Partikeln wurde mit CO₂ als Treibmittel bei 250 bar und 60°C geschäumt. Die resultierende Porengröße im Stegmaterial (d(Pore)) der jeweiligen Schäume wird mit abnehmender Temperierdauer (t) deutlich geringer.

### Detailierte Beschreibung der Erfindung

In dem Verfahren nach Aspekt (1) der Erfindung ist das poröse (Ausgangs-)Material ausgewählt aus thermoplastischen Materialien, glasbildende Substanzen, wie Glas, Metallen und anderen amorph erstarrende Substanzen und Gemischen derselben.

Gemäß dem bevorzugten Aspekt (2) der Erfindung ist das (Ausgangs-)Material ein thermoplastisches Polymer, bevorzugt ein Polystyrol einschließlich Polystyrol oder ein an dem Benzolrest oder der vinylischen Doppelbindung substituiertes Polystyrol, ein Poly(meth)acrylat wie Polymethyl-, Polyethyl- und Polypropyl(meth)acrylat, wobei Polystyrol und Polymethylmethacrylat besonders bevorzugt sind.

Dabei ist die Löslichkeit des Treibmittels in der Matrix nicht kritisch und muss nicht berücksichtigt werden. Das erfindungsgemäße Verfahren hebt sich von allen anderen Mischverfahren und Aufschäumverfahren ab, die das Treibmittel in die Matrix einlösen und dafür viel Zeit benötigen, in der vorliegenden Erfindung erfolgt das Tränken der Kugeldispersion unmittelbar.

Eine kompakte Packung, in der die einzelnen Partikel einander berühren, gemäß der Erfindung ist eine Packung, in der die Partikel einen Volumenbruch von mehr als 0.5 ausmachen (d.h. die Porosität ist kleiner 0.5) und umfasst auch kolloidale Kristalle oder amorphe Anordnungen. In einem Spezialfall der dichtesten Packung von monodispersen Kugeln in einer kubisch-flächenzentrierten kristallinen Anordnung ist der Volumenbruch z.B. 0.74 und Porosität nur 0.26. Die Erfindung ist dabei nicht auf monodisperse Kugeln und auch nicht nur auf kristalline Anordnungen beschränkt, da das Phänomen, das der Erfindung zugrunde liegt, generelle Bedeutung hat. Das thermoplastisches Polymer kann vorzugsweise durch Emulsionspolymerisation hergestellt werden, so dass die dichte Kugelpackung Partikelradien zwischen 20 und 500 nm aufweist.

In einer anderen bevorzugten Ausführungsform ist das Material ein amorph erstarrendes Material, wobei ein Verfahren, das als Ausgangsmaterial Zuckerkugeln verwendet, besonders bevorzugt ist.

Gemäß der Erfindung kann (i) das Überschreiten und Unterschreiten der Glasübergangstemperatur (*T*_{g}) des (thermoplastischen) Materials durch Erwärmen bzw. Kühlen erfolgen, oder (ii) das Überschreiten der Glasübergangstemperatur (*T*_{g}) des (thermoplastischen) Materials teilweise oder vollständig durch die Erniedrigung der *T*_{g} bei Zugabe des überkritischen Gases bewirkt werden und das Unterschreiten der Glasübergangstemperatur (*T*_{g}) des (thermoplastischen) Materials teilweise oder vollständig durch das Entspannen auf Atmosphärendruck bewirkt werden.

Das überkritische Gas kann dabei ein Gas oder Gasgemisch sein, das zu einer Erniedrigung der Glastemperatur des thermoplastischen Materials bei seiner Zugabe führt, vorzugsweise ist das Gas ausgewählt aus N₂, CO₂, und beliebigen anderen überkritschen Gasen und kann auch ein Gemisch derselben sein. Vorzugsweise ist das überkritische Gas CO₂ und N₂ im Mischverhältnis von 0 bis 100 Vol. %.

Das überkritische Gas kann bei einem Druck beginnend beim kritischen Druck p_{C} bis 300 bar vorzugsweise von p_{C} bis 100 bar und einer Temperatur von der kritischen Temperatur T_{C} bis 300 °C, vorzugsweise von T_{C} bis 200°C zugegeben werden.

In dem dargestellten thermoplastischen Material mit homogenen gashaltigen Einschlüssen weisen die gashaltigen Einschlüssen eine mittlere Größe von unter 1 µm, vorzugsweise von unter 0.5 µm auf. Der Volumenanteil der gashaltigen Einschlüsse am Gesamtvolumen des (thermoplastischen) Materials beträgt 0.1 bis 90 %.

In einer besonders bevorzugten Ausführungsform von Aspekt (2) ist das thermoplastische Material ein Polystyrol, insbesondere Polystyrol und das überkritische Gas ist CO₂ oder ein Gemisch mit N₂, und in Schritt (b) weist das überkritische Gas einem Druck vom kritischen Druck p_{C} bis 300 bar, vorzugsweise 10 bis 200 bar, auf.

In einer besonders bevorzugten Ausführungsform von Aspekt (2) ist das thermoplastische Material ein Polymethacrylat, insbesondere Polymethylmethacrylat und das überkritische Gas ist CO₂ oder ein Gemisch N₂, und in Schritt (b) weist das überkritischen Gas einem Druck vom kritischen Druck p_{C} bis 300 bar, vorzugsweise 10 bis 200 bar, auf.

Der hier verwendete Ansatz zur Erzeugung nanodisperser Einschlüsse in einer hochviskosen Matrix ist in Fig. 3 schematisch dargestellt. Ausgangspunkt des Prinzips zur Darstellung nanodisperser Einschlüsse in einer hochviskosen Matrix sind dichte Packungen von Nanopartikeln. Diese sind leicht zugänglich, da sie durch Trocknung von Nanopartikeldispersionen, die durch Emulsions-polymerisation dargestellt wurden, erzeugt werden können (Norris, D. J. et al., Advanced Materials 16:1393-1399 (2004)). Die Trocknung ist hierbei auf verschiedene Weise möglich:
- Zentrifugieren und anschließendes Abpipettieren des Lösungsmittels
- Abfiltrieren über einem nanostrukturierten Membranfilter
- Verdunstung des Lösungsmittels

Die auf eine dieser Weisen hergestellte Nanopartikelpackung wird anschließend in die Atmosphäre eines später zu komprimierenden Gases oder schon komprimierten Gases gebracht. Anschließend werden Druck und Temperatur in der Probenkammer so eingestellt, dass das Gas im überkritischen Zustand vorliegt.

Im Rahmen dieser Erfindung wurden sowohl Kohlenstoffdioxid als auch Stickstoff als überkritische Gase verwendet. Die kritischen Parameter dieser Gase sind in Tabelle 1 gezeigt.

**Tab. 1: Kritische Werte für Stickstoff und Kohlenstoffdioxid (Boyer, S. A. E. und Grolier, J. P. E., Pure and Applied Chemistry 3:593-603 (2005)).**

| Fluid | *p*_{c}/MPa | *T*_{c}/K |
|---|---|---|
| N₂ | 3.398 | 126.19 |
| CO₂ | 7.375 | 304.13 |

Von vielen Polymeren ist bekannt, dass nahe-kritische Fluide eine teilweise drastische Erniedrigung der Glasübergangstemperatur bewirken. Auf diese Weise ist es durch die Wahl geeigneter Parameter möglich das Polymer unterhalb seiner ursprünglichen Glastemperatur in einen verformbaren Zustand zu überführen. In diesem Zustand ist die Kugelstruktur aufgrund ihrer extrem hohen Oberfläche nicht mehr länger stabil und schmilzt zu einer homogenen, hochviskosen Matrix zusammen. Wegen der Oberflächenspannung besitzen die mit sc-Gas gefüllten Packungshohlräume (auch inverse Plateau-Border) eine thermodynamische Triebkraft ihre Oberfläche zu minimieren, wobei sich nun Gasblasen in einer hochviskosen Polymermatrix ausbilden. Es kann also von einer Phasen- oder Kontinuitätsinversion von Polymerpartikeln in überkritischem Gas zu überkritischen Gasblasen in einer Polymermatrix gesprochen werden.

Die Kontinuitätsinversion ist das kennzeichnende Merkmal dieser Erfindung: Zunächst ist die Gasphase kontinuierlich (d.h. zusammenhängend) und die Polymerpartikel diskret (einzeln) und nach der Kontinuitätsinversion ist die Polymerphase kontinuierlich und die Gasblasen sind abgeschlossen (diskret).

Der Durchmesser der auf diese Weise erzeugten Gasblasen ergibt sich aus der Größenabmessung der Packungshohlräume. Bei der Verwendung von nanometergroßen Partikeln sind die Hohlräume in der Packungsstruktur und somit auch die daraus gebildeten Blasen ebenfalls auf Nanometerskala.

Nach der Bildung der Gaseinschlüsse kann das Material/Polymer auf zwei unterschiedliche Arten fixiert werden. Zum einen kann der Druck des Systems schnell oder langsam erniedrigt werden, wobei es zu einer (adiabatischen oder isothermen) Expansion des überkritischen Gases kommt. Die Volumenzunahme des Gases verläuft hierbei stetig ohne das Auftreten eines Nukleationsschritts, da sich das Gas im überkritischen Zustand befindet. Zusätzlich steigt durch die Expansion des Gases die Glasübergangstemperatur des Polymers/Materials schlagartig an, wodurch eine Fixierung des Systems in Form eines (nanoporösen) Schaums möglich ist. Des Weiteren kann das System auch durch kontrollierte Expansion (mit gleichzeitiger Abkühlung des Systems) zu einem nanostrukturierten Polymer/Material fixiert werden. Die Verringerung der Glastemperatur des Polymers wird durch Wechselwirkungen zwischen Gas und Polymer bestimmt und hängt stark von der Natur des verwendeten Gases ab, wobei dieses Phänomen bei der Verwendung von CO₂ besonders ausgeprägt ist (Shieh, Y. T. und Liu, K. H., Journal of Polymer Research-Taiwan 2:107-113 (2002)).

Bei der oben beschriebenen Erzeugung von Gaseinschlüssen in einer (Polymer-)Matrix muss jedoch zusätzlich die Löslichkeit des Gases im Material/Polymer berücksichtigt werden, welche temperatur- und druckabhängig ist. Eine Druckabsenkung hat in der Regel eine schlechtere Löslichkeit des Gases im Material/Polymer zur Folge. Bei der Expansion einer Gas-Material/Polymermischung kommt es somit zu einer Entmischung der beiden Komponenten, die zur Ausbildung weiterer poröser Strukturen führt.

Im Vergleich zum Principle of Supercritical Microemulsion Expansion (kurz POSME-Verfahren), welches von STREY, SOTTMANN und SCHWAN ebenfalls zur Darstellung von nanoporösen Materialien, ausgehend von überkritischen, fixierbaren Mikroemulsionen, entwickelt wurde, hat dieser Ansatz den Vorteil, dass kein Tensid notwendig ist (Schwan, M., Dissertation (2006) Cuvillier Verlag, Göttingen). Darüber hinaus muss beim POSME-Verfahren die zum Teil starke Abhängigkeit des Phasenverhaltens der Mikroemulsion von Druck, Temperatur und Zusammensetzung während der Fixierung und Expansion des Systems berücksichtigt werden. So kommt es während der Expansion des Systems zu einem drastischen Anstieg der Grenzflächenspannung zwischen Wasser und überkritischem Fluid, was in der Regel eine Entmischung des Systems zur Folge hat. Dies wiederum führt zu einer starken Vergröberung der resultierenden Schaumstruktur. Entsprechende Effekte müssen bei dem Verfahren, welches dieser Erfindung zu Grunde liegt, nicht berücksichtigt werden, wodurch eine unkompliziertere Herstellung von nanoporösen Materialien möglich ist.

Verglichen mit dem zur Aerogelherstellung verwendeten Verfahren hat das erfindungsgemäßes Verfahren den Vorteil, dass der kostenintensive und aufwändige Trocknungsschritt des Gels, mittels eines überkritischen Fluids, entfällt.

Ein auf den ersten Blick vergleichbarer Ansatz wurde 1984 zum Patent angemeldet. Allerdings wurden dort sehr lange Einwirkzeiten des Gases auf das Polymer gewählt, da die Probe durch das in dem Polymer gelöste Gas aufgeschäumt werden sollte (Martini-Vvedensky, J. E., US Patent No. 4 473 665 (1984)).

Demnach ist eine weitere, die vorliegende Erfindung charakterisierende, Eigenschaft, dass das Treibmittel nicht zur Sättigung des Polymers benötigt wird und sich darin molekular löst, sondern dass das Treibmittel in die Packungshohlräume wie eine Flüssigkeit einsickert. Hierdurch ergeben sich charakteristisch extrem kurze Kontaktzeiten des überkritschen Fluids mit dem Polymer.

Durch Trocknung der erzeugten Nanopartikel konnten anschließend die gewünschten kolloidalen Kristalle erhalten werden (Fig. 4 und 13). Diese wurden als Ausgangsmaterialien für die Umsetzung des Prinzips der Erzeugung nanodisperser Einschlüsse in einer hochviskosen Matrix verwendet, bei der CO₂ als auch N₂ als überkritische Gase eingesetzt wurden. Hierbei konnte bei dem System PMMA/CO₂, aufgrund der starken Wechselwirkung zwischen Polymer und Treibmittel, eine sehr ausgeprägte Verringerung der Glasübergangstemperatur festgestellt werden, so dass das Polymer bereits bei Raumtemperatur unter CO₂-Atmosphäre in einen verformbaren Zustand überführt wurde. Aus diesem Grund war das Aufschäumen nur schwer kontrollierbar und es resultierten Schäume, deren Poren inhomogen verteilt waren und eine Größe von ungefähr 20 µm aufwiesen (Fig. 5). Durch längere Einwirkzeiten des Treibmittels auf den PMMA-Kristall konnte zwar die Größenverteilung der Schaumporen verringert werden, jedoch blieb es bei einer Porengröße von ca. 20 µm (Fig. 6). Eine Übertragung der ursprünglichen Nanostruktur des kolloidalen Kristalls war allerdings ansatzweise unterhalb von 20°C möglich. Hier bildete sich auf dem Stegmaterial eine Substruktur die ebenfalls eine schaumartige Struktur aufwies, deren Porengröße jedoch unter 1 µm lag (Fig. 9). Wenn dünne Schichten aus PMMA-Nanopartikeln als Ausgangsmaterial verwendet wurden, entstanden Schäume mit einer Porengröße zwischen 0.5 und 5 µm (Fig. 10). Vermutlich kommt es aufgrund der geringeren Probendicke zu einem schnelleren Austreten des Gases, woraus kleinere Schaumporen resultieren. Zudem war eine Nanostrukturierung der Oberfläche des Schaums zu beobachten, aus der hervor ging, dass das Prinzip, auf dem diese Arbeit basiert, praktisch umgesetzt werden konnte (Fig. 11). Wenn N₂ anstelle von CO₂ als Treibmittel verwendet wurde, war die Darstellung eines PMMA-Schaums nicht möglich, da die Glastemperatur des Polymers durch N₂ nicht ausreichend abgesenkt wurde (Fig. 12).

Bei dem System PS/CO₂ kam es zu teilweise deutlichen Unterschieden im Vergleich zur Verwendung von PMMA, deren Ursache hauptsächlich in der schwächeren Wechselwirkung zwischen CO₂ und PS liegt. Somit wurde PS unter CO₂-Atmosphäre erst ab 40°C in einen verformbaren Zustand, der für den Aufschäumprozess erforderlich ist, überführt. Oberhalb von 40°C kam es bei einer Temperaturerhöhung sowohl zu einer Abnahme der Materialdichte als auch zu einer Vergröberung der Struktur. Allerdings wurde die Substruktur, welche aus der Partikelstruktur des Ausgangsmaterials stammt, bei steigender Temperatur zunehmend schwächer. Bei 60°C konnte schließlich keine Substruktur, die im Kontrast zu den PMMA-Schäumen nicht aus einem Schaum sondern aus zusammen geschmolzenen Partikeln besteht, mehr ausgemacht werden (Fig. 14 und 15). Die vielversprechendsten Ergebnisse konnten in dieser Arbeit mit dem System PS/N₂ erzielt werden. Hier kam es zur Bildung eines homogenen Schaums mit einer Porengröße unter 1 µm und eine zusätzlichen Substruktur im Nanometerbereich (Fig. 19 und 20).

Ein weiteres Beispiel für die Umsetzbarkeit des erfindungsgemäßen Verfahrens ergibt sich aus der Verwendung von Zucker als thermoplastisches Ausgangsmaterial. Kleinporige Zuckerschäume besitzen in der Lebensmittelindustrie aufgrund ihres einzigartigen Mundgefühls und in Anbetracht der zunehmenden Bedeutung von "Low-Calorie-Food" ein großes Anwendungspotential.

Ausgehend von einer amorphen Packung von Zuckerpartikeln (Fig. 23) konnten Zuckerschäume im unteren Mikrometerbereich dargestellt werden (Fig. 24). Hierbei gilt es hervorzuheben, dass sich das Treibmittel (CO₂) nur in sehr geringen Mengen in der Zuckermatrix löst (G. Ferrentino, et al., Ind. Eng. Chem. Res. 49:2992-3000 (2010)) und somit das monomer gelöste Treibmittel nicht für den Schäumprozess verantwortlich sein kann. Vielmehr wird die poröse Struktur durch das, in den Packungshohlräumen eingeschlossene CO₂, erhalten, wobei Schichtdicken >10 mm verwendet wurden. Dies stellt eine deutliche Abgrenzung zu bisher bekannten Schäumprozessen, in denen lange Einwirkzeiten des Treibmittels auf die zu schäumende Matrix oder lediglich sehr dünne Schichten (<1 mm) verwendet werden, dar (B. Krause, Polymer Nanofoams, 2001; Enschede, NL; Y. Handa and Z. Zhang, J. Polym. Sci. B: Polym. Phys. 38:716-725 (2000); S. K. Goel and E. J. Beckman, Polymer Engineering and Science 34:1137-1147 and 1148-1156 (1994)). Darüber hinaus konnte gefunden werden, dass umso kürzer Temperierdauer gewählt wurde die Porengröße minimiert werden konnte (Fig. 25). Anhand dieses Anwendungsbeispiels konnte gezeigt werden, dass es möglich ist, ein in Partikelform vorliegendes (amorph erstarrendes) Material mittels dem erfindungsgemäßen Verfahren in einen mikro- oder nanoporigen Schaum zu überführen, ohne, dass hierbei die Löslichkeit des Treibmittels in der Matrix aus dem (amorph erstarrenden) Material berücksichtigt werden muss.

### Beispiele

### Abkürzungen und Symbole

Allgemein: p Druck; *p*ₖᵣᵢₜ/*p*_{c} kritischer Druck; *t* Zeit; *T* Temperatur; *T*_{c} kritische Temperatur; *T*_{g} Glasübergangstemperatur; *T*ₘ Schmelztemperatur.

Polymere und chemische Substanzen: KPS Kaliumperoxodisulfat; PEMA Polyethylmethacrylat; PMMA Polymethylmethacrylat; PS Polystyrol.

### Beispiel 1: Aufschäumversuche mit PMMA.

CO₂ als Treibmittel: Bei den Aufschäumversuchen von PMMA mit CO₂ wurden die kolloidalen Polymer-Kristalle als Ausgangsmaterial verwendet. Fig. 4 zeigt das Edukt vor dem Aufschäumen. Die Partikel ordnen sich beim Entfernen des Lösungsmittels in Schichten aus dichten Packungen an, wobei die einzelnen Schichten eine hexagonale Anordnung der Kugeln aufweisen. Ferner ist zu erkennen, dass der Anteil an Fehlordnungen, der zu einer Verringerung der Packungsdichte führt, sehr gering ist. Folglich kann angenommen werden, dass die Raumausfüllung des Kristalls nahe dem Idealwert von 74% liegt. Somit steht ungefähr ein Viertel des Volumens dem später zugeführten Gas zur Verfügung.

Fig. 5 zeigt das Ergebnis eines Aufschäumversuchs eines kolloidalen PMMA-Kristalls (Fig. 4) nachdem er 10 Minuten einer Temperatur von 50°C und einem CO₂-Druck von 200 bar ausgesetzt war. In der Mitte der Probe hat sich ein Schaum mit einer Porengröße im Bereich von 20 µm gebildet. Nach außen hin wird der Schaum jedoch zunehmend kleinporiger bis hin zu einer nahezu glatten Oberfläche. Die Unterschiede der Morphologie innerhalb der Probe lassen sich dadurch erklären, dass es vermutlich innerhalb der 10 Minuten nicht zu einer homogenen Verteilung des CO₂ gekommen ist und der Aufschäumprozess somit ungleichmäßig stattgefunden hat. An der Oberfläche sollte aufgrund des starken Kontakts mit CO₂ die Oberflächenspannung für die Ausbildung einer glatten Fläche verantwortlich sein.

Um zu überprüfen inwiefern die Diffusion des Gases durch die Polymermatrix einen Einfluss auf den gebildeten Schaum hat wurde in einem weiteren Experiment die Probe 1 Stunde unter CO₂-Atmosphäre belassen bevor für 10 Minuten auf 50°C erwärmt wurde. Der dadurch entstandene Schaum ist in Fig. 6 dargestellt. Aus Fig. 6 geht hervor, dass eine längere Einwirkzeit des CO₂-Gases vor dem Erwärmen einen positiven Effekt auf die Homogenität des Schaums hat. Dies bedeutet, dass es bis zu einer Stunde dauert bis es zur vollständigen Diffusion des Gases durch die Polymermatrix gekommen ist. Zwar ist der oben gezeigte Schaum homogener als der in Fig. 5 gezeigte, jedoch liegt die Struktur immer noch deutlich oberhalb der angestrebten Porengröße. Da die Porengröße weit über der Strukturgröße des kolloidalen Kristalls liegt und da selbst bei genauerer Betrachtung keine Hinweise auf die ursprüngliche Struktur zu finden sind, liegt die Vermutung nahe, dass die Schaumstruktur unabhängig von der Struktur des Kristalls gebildet wurde. Dies würde bedeuten, dass es vor der Expansion zum vollständigen Zusammenschmelzen der Partikel kommt. Um die Wahrscheinlichkeit eines Erhalts der ursprünglichen Nanostruktur zu erhöhen wurden weitere Versuche bei geringeren Temperaturen und ohne Einwirkzeit durchgeführt. Damit der überkritische Zustand des Gases gewährleistet ist, wurde die untere Temperaturgrenze zunächst auf 35°C festgelegt. Alle Aufschäumversuche wurden wiederum bei einem Druck von 200 bar durchgeführt. Die Ergebnisse sind in Fig. 7 zusammengefasst. Zwar sind die in Fig. 7 gezeigten Schäume in ihrer Struktur leicht unterschiedlich, jedoch bleibt es bei einer Porengröße im Bereich zwischen 10-30 µm. Zudem wird deutlich, dass es bei einer Absenkung der Schäumtemperatur eher zu einer Ausbildung von Kanälen durch die Matrix anstelle eines geschlossen-zelligen Schaums kommt. Folglich konnte durch eine Verringerung der Temperatur weder die Nanostruktur des kolloidalen Kristalls übertragen noch der Aufschäumprozess verbessert werden.

Neben der Temperatur könnte auch die Temperierdauer, in der der Kolloidkristall den gewählten Bedingungen (Druck und Temperatur) ausgesetzt ist, einen entscheidenden Einfluss auf die Struktur des resultierenden Schaums haben. Aus diesem Grund wurden weitere Aufschäumversuche nach einer Temperierdauer von 1, 5 und 20 Minuten bei einer konstanten Temperatur von 40°C und einem Druck von 200 bar durchgeführt. Die Ergebnisse dieser Reihe sind in Fig. 8 dargestellt. Die bei den unterschiedlichen Temperierdauern entstandenen Schäume weisen deutliche Unterschiede in ihrer Beschaffenheit auf. Während es nach 1 Minute kaum zum Aufschäumen der Probe gekommen ist, ist das Ergebnis nach 5 Minuten vergleichbar mit den vorherigen Schäumen, welche den Bedingungen für 10 Minuten ausgesetzt waren. Eine Verlängerung über diese Temperierdauer hinaus resultiert ähnlich wie eine Verringerung der Schäumtemperatur in der Ausbildung von Kanälen und in einer höheren Materialdichte. Allerdings konnte in keinem der drei Versuche eine sich von der Struktur des Nanopartikelkristalls ableitende Nanostrukturierung des Schaums beobachtet werden. Vielmehr lieferten die bislang durchgeführten Versuche unabhängig von der Schäumtemperatur, der Temperierdauer und der Einwirkzeit des Gases, mikrometergroße Schaumblasen, die in einer homogenen Polymermatrix eingebettet sind. Dies legt die Vermutung nahe, dass die Nanopartikelkristalle schon bei geringen Temperaturen und CO₂-Drücken komplett geschmolzen sind, wodurch die Nanostruktur des Kristalls verloren geht. Um diese Vermutung zu überprüfen wurde ein weiterer Schäumversuch bei 20°C, 75 bar und einer Temperierdauer von 10 Minuten durchgeführt. Der auf diese Weise erzeugte Schaum ist in Fig. 9 dargestellt.

Die Aufnahmen zeigen, dass es bereits bei Raumtemperatur und Befülldruck der Zelle zum Aufschäumen der Probe kommt. Die Schaumstruktur ähnelt auf den ersten Blick stark den anderen Schäumen, wobei bei genauerer Betrachtung zu erkennen ist, dass dem 20 µm-Schaum eine Unterstruktur zugrunde liegt, die in den Plateau-Bordern der Schaumporen zu finden ist. Diese weist ebenfalls eine poröse Struktur auf, die jedoch im Nanometerbereich liegt. Der Ursprung dieser Struktur könnte darin liegen, dass bei ausreichend niedriger Temperatur der Kolloidkristall nicht vollständig aufschmilzt, wodurch die Nanostruktur des Kristalls nicht gänzlich verloren geht. Diese Annahme würde mit der Beobachtung, dass die Größe der Unterstruktur in der Größenordnung der Nanostruktur des Kolloidkristalls liegt, einhergehen. Neben den bisher dargestellten PMMA-Schäumen sind auch dünne PMMA-Schaumschichten von Interesse, weswegen dünne Schichten aus PMMA-Partikeln als Ausgangsmaterial für die Schäumversuche verwendet wurden. Die Schäumversuche wurden bei 50°C und 200 bar durchgeführt, wobei eine Temperierdauer von 10 Minuten gewählt wurde. In Fig. 10 sind die REM-Aufnahmen des Inneren des auf diese Weise erzeugten Schaums abgebildet.

Bei der Verwendung von dünnen Schichten aus PMMA-Partikeln konnte ein Schaum dargestellt werden, der sich im Vergleich zu den bisher dargestellten PMMA-Schäumen durch eine kleinere Porengröße auszeichnet. Allerdings ist die Strukturgröße weiterhin zu groß um von der Ausgangsstruktur stammen zu können. Wird hingegen die Oberfläche des aus der PMMA-Schicht hergestellten Schaums untersucht erkennt man im Vergleich zu der Oberfläche der vorherigen Schäume, welche sich immer glatt darstellte, eine eindeutige Nanostruktur. In Fig. 11 sind die Oberflächen dieser Proben dargestellt. Zum einen sind die Nanopartikel des kolloidalen Kristalls zu erkennen, zum anderen sind auf der Oberfläche eine Vielzahl von Poren auszumachen, die in einer Größenordnung zwischen 50 und 200 nm liegen. Besonders bei der linken Abbildung wird deutlich, dass diese Poren vermutlich aus Gaseinschlüssen zwischen den dicht gepackten Polymerpartikeln hervorgehen. Wenn die beiden Abbildungen im Vergleich betrachtet werden wird ersichtlich, dass es bei höheren Temperaturen zu einem stärkeren Verschmelzen der Polymerpartikel kommt, wodurch die Partikel lediglich schwach unter der Oberfläche auszumachen sind. Des Weiteren ist die Dichte der Vertiefungen in der rechten Abbildung größer. Hier kann jedoch zumindest bei den größeren Poren erneut davon ausgegangen werden, dass sie durch Gaseinschlüsse der Freiräume in der Packung entstanden sind, womit die Umsetzbarkeit des dieser Arbeit zugrunde liegenden Prinzips nachgewiesen werden konnte.

N₂ als Treibmittel: Wie vorstehend gezeigt, stellt sich die Handhabung des Systems PMMA/CO₂ als schwierig dar, weil es bereits beim Befüllen der Hochdruckzelle mit CO₂ bei Raumtemperatur zu einer solch starken Absenkung der Glastemperatur kommt, dass die Partikel schmelzen. Aus den Referenzen (Tung, K. L. et al., Desalination 1-3:391-400 (2006)) und (de Sales, J. A. et al., Journal of Membrane Science 1-2:129-140 (2008) konnte entnommen werden, dass Stickstoff ebenfalls die Glastemperatur des Polymers absenkt. Allerdings ist dieser Effekt aufgrund des inerten Verhaltens von N₂ bedeutend schwächer als bei CO₂, weswegen es sich anbietet Aufschäumversuche in dem System PMMA/N₂ durchzuführen. In Fig. 12 ist das Ergebnis des Aufschäumversuchs mit diesem System bei 99°C und 300 bar dargestellt. Hierbei wurde ebenfalls das vorstehend verwendete Ausgangsmaterial eingesetzt. Es ist eindeutig zu erkennen, dass kein Zusammenschmelzen der Partikel stattgefunden hat und die Struktur identisch mit der des Ausgangsmaterials ist. Somit scheint keine nennenswerte Reduzierung der Glastemperatur statt gefunden zu haben, zumal PMMA unter Luftatmosphäre eine Glastemperatur von 104°C hat. Da das Polymer jedoch bei der Expansion ohne Temperaturveränderung fixiert werden soll, ist eine Schäumtemperatur oberhalb von 100°C nicht sinnvoll. In diesem Fall läge die Schäumtemperatur zu nah an der Glastemperatur des Polymers bei Atmosphärendruck, so dass ein fixierter Zustand unmittelbar nach der Expansion nicht gewährleistet wäre.

### Beispiel 2: Aufschäumversuche mit Polystyrol.

CO₂ als Treibmittel: Bei den Aufschäumversuchen mit PMMA kam es bei allen Temperaturen oberhalb von 20°C, aufgrund der ausgeprägten Wechselwirkung zwischen CO₂ und PMMA, zu einer starken Absenkung der Glastemperatur, wodurch die Nanostruktur des Kristalls nicht auf den Schaum übertragen werden konnte. Aus diesem Grund wurden weitere Versuchsreihen mit dem System PS/CO₂ durchgeführt, da es in diesem Fall zu einer weniger ausgeprägten Verringerung der Glastemperatur des Polymers durch das CO₂ kommen sollte (Shieh, Y. T. und Liu, K. H., Journal of Polymer Research-Taiwan 2:107-113 (2002)). Als Ausgangsmaterial wurden die aus der Emulsionspolymerisation erhaltenen kolloidalen Polystyrol-Kristalle verwendet. Eine REM-Aufnahme dieser Kristalle ist in Fig. 13 dargestellt. Äquivalent zu den PMMA-Kristallen, kam es bei den PS-Partikeln zu einer Anordnung in dichtester Packung, wobei die Partikel einen Durchmesser von ca. 80 nm aufweisen. Auch hier ist anzumerken, dass es aufgrund der extrem hohen Anzahl an sphärischen Partikeln zu Fehlern in der Kugelpackung kommt, die sich durch den Kristall fortpflanzen.

In Fig. 14 ist das Ergebnis eines Aufschäumversuchs bei 60°C und 200 bar zu sehen. Der kolloidale Kristall wurde den Bedingungen für 10 Minuten ausgesetzt bevor expandiert wurde. Bei dem Aufschäumversuch eines PS-Kristalls wurde ein Schaum mit einer Porengröße zwischen 1 und 5 µm erhalten, der im Kontrast zu den Ergebnissen der Aufschäumversuche mit PMMA eine nahezu gleichmäßige Porengrößenverteilung aufweist. Analog zu den Ergebnissen aus Beispiel 1 stellt sich die Oberfläche als glatt dar, was wiederum durch die Oberflächenspannung zu erklären ist. Aufgrund des starken Kontakts zwischen dem Treibmittel und dem Polymer überwiegt die thermodynamische Triebkraft zur Ausbildung eine Grenzfläche mit minimaler Oberfläche. Allerdings ist die Strukturgröße des Schaums immer noch zu groß um direkt aus der Struktur des Polymer-Kristalls hervorgegangen sein zu können. Ob jedoch ein Zusammenhang zwischen den beiden Strukturen besteht oder ob es zunächst zum vollständigen Zusammenschmelzen zu einer homogenen Matrix gekommen ist, gilt es in weiteren Versuchen zu klären.

Um dieser Frage nachzugehen wurde, analog zu den Versuchen mit PMMA die Schäumtemperatur sukzessive verringert. Hierfür wurden Schäumversuche im Bereich von 60-40°C durchgeführt, wobei stets ein CO₂-Druck von 200 bar verwendet wurde. Die Ergebnisse sind in Fig. 15 zusammengefasst.

Bei der Betrachtung dieser Temperaturreihe werden vor allem zwei Sachverhalte deutlich. Zum einen nimmt bei einer Absenkung der Temperatur die Porengröße stetig ab, wobei zum anderen die Materialdichte im Schaum immer weiter zunimmt. Ferner kann beobachtet werden, dass es mit abnehmender Temperatur zu einer immer stärker ausgeprägten Unterstruktur des Stegmaterials bzw. der Schaummatrix kommt. Diese ist exemplarisch für den bei 50°C erzeugten Schaum in Fig. 16 dargestellt.

Bei der genauen Betrachtung des Stegmaterials wird deutlich, dass eine Substruktur vorhanden ist, in der die PS-Partikel zu erkennen sind. Allerdings muss hier zwischen zwei unterschiedlichen Substrukturen unterschieden werden. Einerseits erkennt man in Fig. 16 (Mitte) die zu kleinen Stegen zusammengeschmolzenen Partikel. Aufgrund der gestreckten Gestalt dieser Stege, liegt die Vermutung nahe, dass diese durch die Herstellung der Bruchkante verzerrt wurden und somit das Innere des Stegmaterials zu sehen ist. Andererseits kann in Fig. 16 (Rechts) unter einer kontinuierlichen Schicht eine Kugelstruktur ausgemacht werden. Im Umkehrschluss kann hier davon ausgegangen werden, dass es sich um eine Stelle handelt die nicht durch das Brechen beeinträchtigt wurde, sondern um eine Vertiefung die durch die Probenpräparation unverändert geblieben ist. Somit liegt dem Schaum eine Substruktur in einer Größenordnung im Nanometerbereich zugrunde.

Wird die Schäumtemperatur auf 30 bzw. 20°C abgesenkt kommt es, wie in Fig. 17 zu sehen, bei den Aufschäumversuchen nicht mehr zu einer ausreichenden Überschreitung der Glastemperatur des Polymers. Folglich kann in beiden Fällen die ursprüngliche Struktur des kolloidalen Kristalls nach dem Schäumprozess noch ausgemacht werden. Bei einer Schäumtemperatur von 30°C ist ein leichtes Anschmelzen der Partikel zu erkennen, wohingegen bei 20°C keine Strukturveränderungen stattgefunden haben. Dies lässt die Schlussfolgerung zu, dass die Glastemperatur von Polystyrol bei einem CO₂-Druck von 200 bar zwischen 30 und 40°C liegt, wobei der Aggregatzustand des Gases ebenfalls eine Rolle spielen könnte.

Um weitere Informationen über das System PS/CO₂ zu erhalten, wurde in einer weiteren Versuchsreihe die Zeit variiert in der das Polymer den Bedingungen ausgesetzt ist. Fig. 18 zeigt die Ergebnisse dieser Untersuchung, die wiederum bei einem CO₂-Druck von 200 bar und einer Temperatur von 50°C durchgeführt wurde.

Die erhaltenen PS-Schäume zeigen bei einer Variation der Temperierdauer deutliche Unterschiede. Nach 1 Minute hat sich zwar ein kleinporiger Schaum gebildet, jedoch ist die Materialdichte im Vergleich zu dem nach 5 Minuten entstandenen Schaum sehr hoch, welcher den bisher bei einer Temperierdauer von 10 Minuten hergestellten Schäumen stark ähnelt. Wie Fig. 18 (rechts) zu entnehmen ist hat eine weitere Erhöhung der Temperierdauer zur Folge, dass es kaum noch zur Schaumbildung kommt. In diesem Fall konnten lediglich vereinzelte Poren in einer ansonsten homogenen Polymermatrix ausgemacht werden.

N₂ als Treibmittel: Neben CO₂ sollte auch das Verhalten von N₂ als Treibmittel beim Aufschäumen der kolloidalen PS-Kristalle untersucht werden. Da N₂ jedoch einen deutlich geringeren Einfluss auf die Glastemperatur des Polymers hat, ist es notwendig die Schäumtemperatur zu erhöhen. Daher wurden die Schäumversuche bei einer Temperatur von 99°C und einem N₂-Druck von 300 bar durchgeführt. Eine REM-Aufnahme des auf diese Weise erhaltenen Schaums ist in Fig. 19 zu sehen.

Wie aus Fig. 19 hervorgeht, kam es bei dem System PS/N₂ bei 99°C und 300 bar zu einem homogenen Aufschäumen der Probe. Die durchschnittliche Porengröße liegt hierbei bei ca. 1 µm, was einen deutlichen Fortschritt im Vergleich zu den vorangegangenen Schäumen darstellt. Allerdings ist auch zu erwähnen, dass die Materialdichte sehr hoch ist und somit nur mit Einschränkungen von einem Schaum gesprochen werden kann. Um zu überprüfen ob eine zusätzliche Struktur auf Nanometerskala vorhanden ist, wurde das Material bei höheren Vergrößerungen untersucht. Diese REM-Aufnahmen sind in Fig. 20 gezeigt. Bei der Betrachtung von Fig. 20 wird deutlich, dass dem 1 µm-Schaum eine Substruktur im Nanometerbereich zu Grunde liegt, in der die ursprüngliche Partikelstruktur deutlich zu erkennen ist. Man sieht, insbesondere in Fig. 20 rechts, dass an der Bruchkante die aneinander geschmolzenen Partikel bei der Herstellung der Bruchkante gestreckt wurden. An den Materialstellen die nicht durch das Brechen der Probe beeinträchtigt wurden, kann man ebenfalls die Partikelstruktur erkennen, die mit einer homogenen Polymerschicht überzogen ist.

### Beispiel 3: Sub-200 nm-Schäume.

Bei einigen der Aufschäumversuche mit dem System PMMA/CO₂ kam zusätzlich zu den bereits gezeigten Ergebnissen auch zur Ausbildung von Polymerschäumen mit einem Porendurchmesser unterhalb von 200 nm (Fig. 21). Darüber hinaus ist in Fig. 22 zu sehen, dass selbst Schäume mit einem Porendurchmesser unterhalb von 100 nm und einer hohen Porosität realisiert wurden. Dies zeigt eindeutig, dass erfindungsgemäß die Herstellung nanozellulärer Schäume mit einer hohen Porosität nach dem beschriebenen Verfahren möglich ist.

### Beispiel 4: Herstellung von Zuckerschäumen.

In diesem Ausführungsbeispiel werden die in Form einer Dispersion hergestellten Zuckerkugeln in einem Tiegel getrocknet. Eine Schüttung der getrockneten Zuckerkugeln wird dann in einen druckfesten Behälter gegeben, welcher mit einem Treibmittel, hier flüssiges CO₂ bei Raumtemperatur und ca. 70 bar, befüllt wird. Wahlweise kann jedes geeignete andere Treibmittel gewählt werden. Das Treibmittel tränkt unmittelbar die Kugelschüttung und erfüllt die Kugelzwischenräume in Sekundenbruchteilen. Erfindungsgemäß ist wegen der mikroporösen Natur der Schüttung nur diese kurze Zeitspanne nötig, um das Treibmittel mit dem zu schäumenden thermoplastischen Material auf mikroskopischer Skala in Nachbarschaft und Kontakt zu bringen. Der druckfeste Behälter wird nun bei kontrolliertem Druck auf die gewünschte Temperatur eingestellt, bevor der Treibmitteldruck nach Ablauf der kontrollierten Temperierdauer, während derer die Inversion der diskreten Zuckerkugeln zu einer kontinuierlichen Zuckermatrix erfolgt, auf Normaldruck entspannt. Bei dieser Expansion wird die viskose Zucker-Matrix, in der das Treibmittel nun in Form von feinstverteilten Einschlüssen vorliegt, aufgeschäumt.

## Patentansprüche

1. Verfahren zur Erzeugung eines porösen Materials mit homogenen gashaltigen Einschlüssen im Mikrometer- und Submikrometer-Bereich umfassend
(a) Bereitstellen einer kompakten Packung des dem porösen Material entsprechenden Ausgangsmaterials, in der die einzelnen Partikel einander berühren;
(b) Zugabe eines überkritischen Gases oder überkritischen Gasgemisches;
(c) Überschreiten der Glasübergangstemperatur (*T*_{g}) des Ausgangsmaterials unter Kontinuitätsinversion; und
(d) Entspannen auf Atmosphärendruck und Verfestigen durch Unterschreiten von *T*_{g} des Ausgangsmaterials.

2. Verfahren nach Anspruch 1, wobei das poröse Material ausgewählt ist aus thermoplastischen Materialien, glasbildende Substanzen, wie Glas, Metallen und anderen amorph erstarrende Substanzen und Gemischen derselben, und vorzugsweise ein thermoplastisches Material ist, wobei eine Löslichkeit des Treibmittels in der Matrix aus dem Ausgangsmaterial nicht erforderlich ist.

3. Verfahren nach Anspruch 2, wobei das thermoplastische Material ein thermoplastisches Polymer, bevorzugt ein Polystyrol, Poly(meth)acrylat und besonders bevorzugt Polystyrol oder Polymethylmethacrylat ist.

4. Verfahren nach einem oder mehreren der Anspruch 1 bis 3, wobei die kompakte Packung des Materials ein thermoplastisches Polymer ist, das durch Emulsionspolymerisation erhältlich ist und eine dichte Kugelpackung mit Partikelradien zwischen 20 und 500 nm aufweist.

5. Verfahren nach Anspruch 1 oder 2, wobei das Material ein amorph erstarrendes Material und insbesondere das Ausgangsmaterial Zuckerkugeln sind.

6. Verfahren nach einem oder mehreren der Ansprüche 1 bis 5, wobei das Überschreiten und Unterschreiten der Glasübergangstemperatur (*T*_{g}) des Materials durch Erwärmen bzw. Kühlen erfolgt.

7. Verfahren nach einem oder mehreren der Ansprüche 1 bis 5, wobei das Überschreiten der Glasübergangstemperatur (*T*_{g}) des Materials teilweise oder vollständig durch die Erniedrigung der *T*_{g} bei Zugabe des überkritischen Gases bewirkt wird und das Unterschreiten der Glasübergangstemperatur (*T*_{g}) des Materials teilweise oder vollständig durch das Entspannen auf Atmosphärendruck bewirkt wird.

8. Verfahren nach einem oder mehreren der Ansprüche 1 bis 7, wobei das überkritische Gas ein Gas oder Gasgemisch ist, das bei seiner Zugabe zu dem Ausgangsmaterial einer Erniedrigung der *T*_{g} führt, vorzugsweise das Gas ausgewählt ist aus der Gruppe der Edelgase, sowie N₂, CO₂, N₂O, Ethan, fluorierte Kohlenwasserstoffe und anderer überkritische Fluide, und Gemischen derselben.

9. Verfahren nach einem oder mehreren der Ansprüche 1 bis 8, wobei das überkritische Gas bei einem Druck von 10 bis 300 bar vorzugsweise 30 bis 80 bar und einer Temperatur von 0 bis 200 °C, vorzugsweise 20 bis 80°C zugegeben wird.

10. Verfahren nach einem oder mehreren der Ansprüche 1 bis 9, wobei die gashaltigen Einschlüssen eine mittlere Größe von unter 1 µm, vorzugsweise von unter 0,5 µm aufweisen und/oder der Volumenanteil der gashaltigen Einschlüsse am Gesamtvolumen des Materials 0,1 bis 90 % beträgt.

11. Verfahren nach einem oder mehreren der Ansprüche 2 bis 10, wobei das thermoplastische Material ein Polystyrol, insbesondere Polystyrol und das überkritische Gas CO₂ und N₂ (im Mischungsverhältnis 0 bis 100 Vol.-%) ist, und in Schritt (b) das überkritischen Gas einem Druck von p_{c} bis 300 bar aufweist.

12. Verfahren nach einem oder mehreren der Ansprüche 2 bis 10, wobei das thermoplastische Material ein Polymethacrylat, insbesondere Polymethylmethacrylat und das überkritische Gas CO₂ und N₂ (im Mischungsverhältnis 0 bis 100 Vol.-%) ist, und in Schritt (b) das überkritische Gasgemisch eine Druck von p_{c} bis 300 bar aufweist.

13. Verfahren nach einem oder mehreren der Ansprüche 2 bis 10, wobei das amorph erstarrende Material Zuckerkugeln sind und das überkritische Gas CO₂ oder CO₂ und N₂ (im Mischungsverhältnis 0 bis 100 Vol.-%) ist, und vorzugsweise die Zugabe des Gases in Schritt (b) bei einem Druck von wenigstens 70 bar erfolgt.

## Claims

1. A process for producing a porous material containing homogeneous gas-containing inclusions in the micrometer and submicrometer range, comprising:
(a) providing a compact packing of the starting material corresponding to the porous material, in which the individual particles contact one another;
(b) adding a supercritical gas or supercritical mixture of gases;
(c) surpassing the glass transition temperature (T_{g}) of the starting material with continuity inversion; and
(d) releasing to atmospheric pressure and solidifying by falling below the T_{g} of the starting material.

2. The process according to claim 1, wherein said porous material is selected from thermoplastic materials, glass-forming substances, such as glass, metals and other amorphous-solidifying substances, and mixtures thereof, preferably being a thermoplastic material, wherein solubility of the blowing agent in the matrix from the starting material is not required.

3. The process according to claim 2, wherein said thermoplastic material is a thermoplastic polymer, preferably a polystyrene or poly(meth)acrylate, more preferably polystyrene or poly(methyl methacrylate).

4. The process according to one or more of claims 1 to 3, wherein the compact packing of the material is a thermoplastic polymer obtainable by emulsion polymerization and having a close packing of spheres with particle radii of from 20 to 500 nm.

5. The process according to claim 1 or 2, wherein said material is an amorphous-solidifying substance, the starting material being sugar balls, in particular.

6. The process according to one or more of claims 1 to 5, wherein said surpassing of and falling below the glass transition temperature (T_{g}) of the material is effected by heating or cooling, respectively.

7. The process according to one or more of claims 1 to 5, wherein said surpassing of the glass transition temperature (T_{g}) of the material is caused partially or completely by reducing the T_{g} when the supercritical gas is added, and said falling below the glass transition temperature (T_{g}) of the material is caused partially or completely by said releasing to atmospheric pressure.

8. The process according to one or more of claims 1 to 7, wherein said supercritical gas is a gas or mixture of gases that leads to a reduction of T_{g} when added to the (starting) material, said gas being preferably selected from the group of noble gases as well as N₂, CO₂, N₂O, ethane, fluorinated hydrocarbons, and other supercritical fluids, and mixtures thereof.

9. The process according to one or more of claims 1 to 8, wherein said supercritical gas is added at a pressure of from 10 to 300 bar, preferably from 30 to 80 bar, and at a temperature of from 0 to 200 °C, preferably from 20 to 80 °C.

10. The process according to one or more of claims 1 to 9, wherein said gas-containing inclusions have an average size of below 1 µm, preferably below 0.5 µm, and/or the volume fraction of the gas-containing inclusions in the total volume of the material is from 0.1 to 90%.

11. The process according to one or more of claims 2 to 10, wherein said thermoplastic material is a polystyrene, especially polystyrene, and said supercritical gas is CO₂ and N₂ (at a mixing ratio of from 0 to 100% by volume), and in step (b) said supercritical gas has a pressure of from p_{c} up to 300 bar.

12. The process according to one or more of claims 2 to 10, wherein said thermoplastic material is a polymethacrylate, especially poly(methyl methacrylate), and said supercritical gas is CO₂ and N₂ (at a mixing ratio of from 0 to 100% by volume), and in step (b) said supercritical gas mixture has a pressure of from p_{c} up to 300 bar.

13. The process according to one or more of claims 2 to 10, wherein said amorphous-solidifying material is sugar balls, and said supercritical gas is CO₂ or CO₂ and N₂ (at a mixing ratio of from 0 to 100% by volume), and preferably the addition of the gas in step (b) is performed at a pressure of at least 70 bar.

## Revendications

1. Procédé de production d'un matériau poreux comprenant des inclusions homogènes gazeuses dans la plage du micromètre et du sous-micromètre, comprenant :
(a) la fourniture d'un bourrage compact du matériau de départ correspondant au matériau poreux, dans lequel les particules individuelles sont en contact les unes avec les autres ;
(b) l'addition d'un gaz supercritique ou d'un mélange gazeux supercritique ;
(c) le dépassement de la température de transition vitreuse (*T_{g}*) du matériau de départ, avec inversion de continuité ; et
(d) la détente jusqu'à la pression atmosphérique, et la solidification par passage en-dessous de la *T_{g}* du matériau de départ.

2. Procédé selon la revendication 1, dans lequel le matériau poreux est choisi parmi des matériaux thermoplastiques, des substances vitrifiables telles que le verre, des métaux et d'autres substances à durcissement amorphe, et des mélanges de ceux-ci, et est de préférence un matériau thermoplastique, une solubilité de l'agent porogène dans la matrice du matériau de départ n'étant pas nécessaire.

3. Procédé selon la revendication 2, dans lequel le matériau thermoplastique est un polymère thermoplastique, de préférence un polystyrène, un poly(méth)acrylate et d'une manière particulièrement préférée le polystyrène ou le poly(méthacrylate de méthyle).

4. Procédé selon une ou plusieurs des revendications 1 à 3, dans lequel le bourrage compact du matériau est un polymère thermoplastique, qui peut être obtenu par polymérisation en émulsion et présente un bourrage étanche de billes ayant un rayon de particule compris entre 20 et 500 nm.

5. Procédé selon la revendication 1 ou 2, dans lequel le matériau est un matériau à durcissement amorphe, et en particulier le matériau de départ est constitué de billes de sucre.

6. Procédé selon une ou plusieurs des revendications 1 à 5, dans lequel le passage au-delà et le passage en-dessous de la température de transition vitreuse (*T_{g}*) du matériau sont réalisés par chauffage ou par refroidissement.

7. Procédé selon une ou plusieurs des revendications 1 à 5, dans lequel le dépassement de la température de transition vitreuse (*T_{g}*) du matériau est occasionné en partie ou en totalité par un abaissement de la *T_{g}* lors de l'addition du gaz supercritique, et le passage en-dessous de la température de transition vitreuse (*T_{g}*) du matériau est occasionné en partie ou en totalité par la détente jusqu'à la pression atmosphérique.

8. Procédé selon une ou plusieurs des revendications 1 à 7, dans lequel le gaz supercritique est un gaz ou un mélange gazeux qui, lors de son addition au matériau de départ, conduit à un abaissement de la *Tg,* et le gaz est choisi de préférence dans le groupe des gaz rares, ainsi que de N₂, CO₂, N₂O, de l'éthane, des hydrocarbures fluorés et d'autres fluides supercritiques, et des mélanges de ceux-ci.

9. Procédé selon une ou plusieurs des revendications 1 à 8, dans lequel le gaz supercritique est ajouté sous une pression de 10 à 300 bar, de préférence de 30 à 80 bar, et à une température de 0 à 200 °C, de préférence de 20 à 80 °C.

10. Procédé selon une ou plusieurs des revendications 1 à 9, dans lequel les inclusions gazeuses présentent une taille moyenne inférieure à 1 µm, de préférence inférieure à 0,5 µm, et/ou la proportion en volume des inclusions gazeuses, par rapport au volume total du matériau, est de 0,1 à 90%.

11. Procédé selon une ou plusieurs des revendications 2 à 10, dans lequel le matériau thermoplastique est un polystyrène, en particulier le polystyrène, et le gaz supercritique est CO₂ et N₂ (selon un rapport de mélange de 0 à 100 % en volume), et, dans l'étape (b), le gaz supercritique présente une pression p_{c} allant jusqu'à 300 bar.

12. Procédé selon une ou plusieurs des revendications 2 à 10, dans lequel le matériau thermoplastique est un polyméthacrylate, en particulier le poly(méthacrylate de méthyle), et le gaz supercritique est CO₂ et N₂ (selon un rapport de mélange de 0 à 100 % en volume), et, dans l'étape (b), le mélange gazeux supercritique présente une pression p_{c} allant jusqu'à 300 bar.

13. Procédé selon une ou plusieurs des revendications 2 à 10, dans lequel le matériau à durcissement amorphe est constitué de billes de sucre, et le gaz supercritique est CO₂, ou CO₂ et N₂ (selon un rapport de mélange de 0 à 100 % en volume), et de préférence l'addition du gaz dans l'étape (b) est réalisée sous une pression d'au moins 70 bar.
